# EUROPÄISCHE PATENTSCHRIFT

(11) **EP 0 545 153 B1**
(45) Veröffentlichungstag und Bekanntmachung des Hinweises auf die Patenterteilung: **02.07.2003**
(21) Anmeldenummer: 92119693.7
(22) Anmeldetag: 19.11.1992
(51) Int. Cl.: C08F 10/02, C08F 4/69

(54) **Phillips-Katalysatorsuspension und ihre Verwendung zur Herstellung von Homopolymerisaten und Copolymerisaten des Ethylens**
Phillips catalyst suspension and use thereof for the (co)polymerisation of ethylene
Catalyseur Phillips en suspension et son utilisation pour le (co)polymérisation d'éthylène

(30) Priorität: 29.11.1991 DE 4139256
(43) Veröffentlichungstag der Anmeldung: 09.06.1993
(73) Patentinhaber: Basell Polyolefine GmbH, 50389 Wesseling (DE)
(72) Erfinder: Evertz, Kaspar, Dr., W-6707 Schifferstadt (DE); Saive, Roland, Dr., W-6700 Ludwigshafen (DE); Funk, Guido, Dr., W-6520 Worms 1 (DE); Koelle, Peter, Dr., W-6700 Ludwigshafen (DE); Konrad, Rainer, Dr., W-6701 Goennheim (DE)

(56) Entgegenhaltungen:
- EP-A- 0 270 918
- EP-A- 0 364 636
- EP-A- 0 537 590

## Beschreibung

Die vorliegende Erfindung betrifft ein Verfahren für die Homopolymerisation von Ethylen und die Copolymerisation von Ethylen mit α-Olefinen mittels einer Phillips-Katalysatorsuspension als solche, welche man in ein Vorrats = gefäß einfüllt, und die
A) mindestens einen feinteiligen, geträgerten Chromkatalysator,
B) mindestens eine metallorganische Verbindung und
C) mindestens ein inertes Suspensionsmittel
enthält und welche durch
(1) Auftragen einer Chromverbindung auf ein feinteiliges, anorganisches Hydrogel oder Xerogel unter Bildung einer feinteiligen Katalysatorvorstufe (A'),
(2) Aktivieren der Katalysatorvorstufe (A') bei höheren Temperaturen in einer oxidierenden Atmosphäre, wodurch der Chromkatalysator (A) entsteht, und
(3) Suspendieren des Chromkatalysators (A) zusammen mit der metallorganischen Verbindungen (B) in dem inerten Suspensionsmittel (C)
herstellbar ist.

Die Herstellung von Ethylenhomopolymerisaten und -copolymerisaten mit Hilfe von Phillips-Katalysatoren ist seit langem bekannt (vgl. die US-A-2 825 712, die DE-B-1 020 186, die US-A-2 930 789 oder die US-A-4 037 042).

Die hierbei angewandten Phillips-Katalysatoren wurden in der Vergangenheit stetig weiterentwickelt, um ihre Produktivität zu erhöhen und um die Morphologie und die Molmassenverteilung der hiermit hergestellten Polymerisate weiter zu verbessern.

Bekanntermaßen versteht man unter "Morphologie" die Beschaffenheit des Polymerisatgrießes, welcher bei der (Co)Polymerisation anfällt. Diese Morphologie wird im allgemeinen durch die Parameter Schüttdichte und Korngrößenverteilung charakterisiert.

Bei der steten Weiterentwicklung der Phillips-Katalysatoren hat man erkannt, daß sich diese Morphologie durch die Zugabe von metallorganischen Cokatalysatoren (D) wie Butyllithium (vgl. die US-A-4 845 176), Triethylbor (vgl. die US-A-4 398 004 oder die US-A-4 444 966), Diethylzink (vgl. die US-A-3 403 142) und Methylalumoxan (vgl. die EP-A-0 137 934) zu den aktivierten Phillips-Katalysatoren während der (Co)Polymerisation entscheidend verbessern läßt. Indes stellt die Verwendung von Cokatalysatoren (D) einen verfahrenstechnischen Nachteil dar, weil sie in sehr konstantem Verhältnis zu den verwendeten Phillips-Katalysatoren zudosiert werden müssen, um auch wirklich die optimale Wirkung zu entfalten. Wegen den in technischen Polymerisationsanlagen auftretenden Schwankungen in der Qualität der Ausgangsstoffe wird jedoch ein nicht im voraus bestimmbarer Teil der jeweils angewandten Cokatalysatormenge durch Reaktion mit Verunreinigungen in den Ausgangsstoffen dem eigentlichen Verwendungszweck - der Einwirkung auf den Phillips-Katalysator - entzogen.

Des weiteren ist es bekannt, zum Zwecke der Herstellung von Phillips-Katalysatoren Phosphor- und Chromverbindungen auf feinteilige anorganische Träger aufzutragen. Hierbei wurde als Chromverbindung vor allem Chromtrioxid verwendet. Als Phosphorverbindungen kamen beispielsweise Phosphorsäure oder Triethylphosphat zur Anwendung, welche mit Chromtrioxid zu phosphor- und chromhaltigen Verbindungen reagieren (vgl. die US-A-2 945 015, die DE-A-25 02 940, die DE-A-26 10 422 und die DE-A-28 20 860). Indes ist die Verwendung von Chromtrioxid bei der Herstellung von Phillips-Katalysatoren nachteilig, weil die Verbindung giftig und krebserzeugend ist.

Was die Verwendung weniger toxischer Chromverbindungen bei der Herstellung von Phillips-Katalysatoren und die Verbesserung der Morphologie betrifft, hat der aus der DE-A-38 41 436 bekannte Phillips-Katalysator einen Fortschritt mit sich gebracht. Dieser Katalysator ist herstellbar durch Auftragen einer Phosphorverbindung und den Reaktionsprodukten von Chromacetylacetonaten mit aluminiumorganischen Verbindungen. Die hierbei resultierende Katalysatorvorstufe (A') wird bei höheren Temperaturen in einer oxidierend wirkenden Atmosphäre aktiviert, wodurch ein feinteiliger, geträgerter, phosphorhaltiger Chromkatalysator (A) resultiert. Dieser Chromkatalysator (A) wird in einem Suspensionsmittel resuspendiert und mit einer Alkylborverbindung umgesetzt. Das resultierende Reaktionsprodukt wird allerdings wieder isoliert und in trockenem Zustand für die (Co)Polymerisation verwendet. Bei der (Co)Polymerisation müssen indes noch immer Alkyllithium-Verbindungen als metallorganische Cokatalysatoren (D) hinzugegeben werden.

Aufgabe der vorliegenden Erfindung ist es, ein Verfahren für die Homopolymerisation von Ethylen und die Copolymerisation von Ethylen mit α-Olefinen mittels eines Phillips-Katalysators in der Form einer Suspension bereitzustellen, welcher die Nachteile des Standes der Technik nicht mehr länger aufweist. Insbesondere soll der Phillips-Katalysator bei der (Co)Polymerisation unabhängig vom Ausstoß und den Dosiermengen jederzeit Homopolymerisate und Copolymerisate des Ethylens von konstant guter Morphologie in hohen Ausbeuten liefern.

Diese Aufgabe wurde dadurch gelöst, daß man einen feinteiligen, geträgerten Chromkatalysator (A) in einem inerten Suspensionsmittel (C) zusammen mit speziell ausgewählten metallorganischen Verbindungen (B) suspendiert. Im Hinblick auf den Stand der Technik war es nicht zu erwarten gewesen, daß die in dieser Weise hergestellte Phillips-Katalysatorsuspension Ethylenhomopolymerisate und -copolymerisate von vorzüglicher Morphologie in hoher Ausbeute liefert. Hierbei war es überraschend, daß die Phillips-Katalysatorsuspension als solche für die (Co)Polymerisation verwendet werden kann. Vollends überraschend war der Befund, daß hierbei auf den Zusatz von metallorganischen Cokatalysatoren (D) verzichtet werden kann.

Demgemäß handelt es sich bei dem Gegenstand der vorliegenden Erfindung um eine Phillips-Katalysatorsuspension für die Homopolymerisation von Ethylen und die Copolymerisation von Ethylen mit α-Olefinen, welche
A) mindestens einen feinteiligen, geträgerten Chromkatalysator,
B) mindestens eine metallorganische Verbindung der allgemeinen Formeln I und/oder II,

   MR (I)

   M¹R₂ (II)

   worin die Variablen die folgende Bedeutung haben:
   - M: Lithium, Natrium und Kalium,
   - M¹: Magnesium, Calcium und Zink,
   - R: C₁- bis C₁₀-Alkyl und C₆- bis C₂₀-Aryl;
   und
C) mindestens ein inertes Suspensionsmittel
enthält, wobei die Phillips-Katalysatorsuspension herstellbar ist, indem man
(1) mindestens eine Chromverbindung auf ein feinteiliges, anorganisches Hydrogel oder Xerogel unter Bildung einer feinteiligen Katalysatorvorstufe (A') aufträgt und
(2) die Katalysatorvorstufe (A') bei höheren Temperaturen in einer oxidierenden Atmosphäre aktiviert, wodurch der Chromkatalysator (A) entsteht, und
(3) den Chromkatalysator (A) zusammen mit der metallorganischen Verbindung (B) in dem inerten Suspensionsmittel (C) suspendiert.

Im folgenden wird die Phillips-Katalysatorsuspension für die Homopolymerisation von Ethylen und die Copolymerisation von Ethylen mit α-Olefinen der Kürze halber als "erfindungsgemäße Suspension" bezeichnet.

Die erfindungsgemäße Suspension enthält als ersten wesentlichen Bestandteil mindestens einen feinteiligen, geträgerten Chromkatalysatoren (A). Diese Chromkatalysatoren (A) sind herstellbar, indem man mindestens eine geeignete Chromverbindung auf ein feinteiliges anorganisches Hydrogel oder Xerogel unter Bildung einer Katalysatorvorstufe (A') aufträgt und die erhaltene Katalysatorvorstufe (A') bei höheren Temperaturen in einer oxidierenden Atmosphäre aktiviert.

Erfindungsgemäß kommen für die Herstellung des Chromkatalysators Chrom(VI)- oder Chrom(III)-Verbindungen in Betracht. Von diesen werden die Chrom(III)-Verbindungen bevorzugt verwendet. Hiervon sind diejenigen vorteilhaft, welche unter den Bedingungen des nachstehend im Detail beschriebenen Verfahrensschritts (2) in Chrom(VI)-Verbindungen übergehen.

Beispiele gut geeigneter Chrom(III)-Verbindungen dieser Art sind die wasserlöslichen Salze des dreiwertigen Chroms und Chrom(III)- Chelatkomplexe, welche die vorstehend genannte Anforderung erfüllen. Hiervon sind diejenigen Chrom(III)-Verbindungen besonders vorteilhaft, welche unter den Bedingungen der Aktivierung der Katalysatorvorstufe (A') [Verfahrensschritt (2)] rückstandsfrei in Chrom(VI)-Verbindungen übergehen.

Beispiele ganz besonders gut geeigneter wasserlöslicher Salze des dreiwertigen Chroms sind Chrom(III)-Nitrat und -Acetat.

Beispiele ganz besonders gut geeigneter Chrom(III)-Chelatkomplexe sind die Chrom(III)-Acetylacetonate der allgemeinen Formel V, 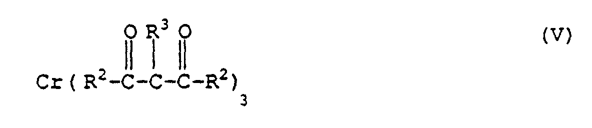 worin die Variable R² für C₁- bis C₁₂-Alkyl und die Variable R³ für Wasserstoff und die Variable R² stehen. Von diesen Verbindungen ist Tris-acetylacetonato-chrom(III) ganz besonders vorteilhaft und wird deshalb ganz besonders bevorzugt angewandt.

Zusätzlich zu den vorstehend genannten Chrom(III)-Verbindungen können noch organische Phosphorverbindungen auf das feinteilige anorganische Hydrogel oder Xerogel aufgetragen werden. Hierfür sind alle organischen Phosphorverbindungen geeignet, welche unter den für die Herstellung der Katalysatorvorstufe (A') angewandten Reaktionsbedingungen nicht mit den Chrom(III)-Verbindungen reagieren.

Beispiele gut geeigneter organischer Phosphorverbindungen, welche die vorstehend genannten Anforderungen erfüllen, sind Phosphor(III)-, -(IV)- und -(V)-Verbindungen

Beispiele besonders gut geeigneter organischer Phosphor(III)-Verbindungen sind Mono-, Di- und Trialkylphosphite und Mono-, Di- und Triarylphosphite sowie die gemischten Alkylarylphosphite. Von diesen sind die Trialkyl- und Triarylphosphite wie Triethylphosphit und Triphenylphosphit vorteilhaft und werden bevorzugt angewandt.

Beispiele besonders gut geeigneter Phosphor(IV)-Verbindungen sind Alkanphosphonsäuremonoalkyl-, -monoaryl-, -dialkyl-, -diaryl- und -alkylarylester sowie Arylphosphonsäuremonoalkyl-, -monoaryl-, -dialkyl-, -diaryl- und -alkylarylester wie Methanphosphonsäuredimethylester, Methanphosphonsäurediethylester, Methanphosphonsäurediphenylester, Benzolphosphonsäuredimethylester und Benzolphosphonsäurediphenylester. Von diesen ist Methanphosphonsäuredimethylester vorteilhaft und wird bevorzugt angewandt.

Beispiele besonders gut geeigneter Phosphor(V)-Verbindungen sind Mono-, Di- und Trialkylphosphate, Mono-, Di- und Triarylphosphate sowie die gemischten Arylalkylphosphate. Von diesen sind Triethylphosphat und Triphenylphosphat vorteilhaft und werden deshalb bevorzugt angewandt.

Von den vorstehend genannten besonders gut geeigneten Phosphor(III)-, -(IV)- und -(V)-Verbindungen ist Triethylphosphat ganz besonders vorteilhaft. Triethylphosphat wird deshalb ganz besonders bevorzugt verwendet.

Hierbei können die vorstehend genannten organischen Phosphorverbindungen und Chromverbindungen bei der Herstellung des neuen Chromkatalysators (A) in beliebiger Reihenfolge nacheinander oder gleichzeitig auf feinteilige anorganische Hydrogele oder Xerogele aufgetragen werden. Es ist von Vorteil, die Phosphor- und Chromverbindungen gleichzeitig aufzutragen.

Beispiele von feinteiligen anorganischen Hydrogelen oder Xerogelen, welche sich für die Herstellung des neuen Chromkatalysators (A) eignen, sind aus der DE-A-24 55 353, der US-A-4 845 176, der US-A-4 364 842, der EP-A-0 215 336 oder der US-A-4 146 695 bekannt. Beispiele gut geeigneter Hydro- und Xerogele sind Siliciumdioxid-, Aluminiumoxid-, Aluminiumsilicat- und Aluminiumphosphat-Hydrogele und -Xerogele.

Methodisch gesehen weist das Auftragen der vorstehend genannten Chromverbindungen oder Phosphor- und Chromverbindungen auf die vorstehend genannten Hydrogele und Xerogele keine Besonderheiten auf, sondern kann in üblicher und bekannter Weise dadurch erfolgen, daß man die betreffenden Hydrogele und Xerogele in einer Lösung suspendiert, welche die betreffenden Chromverbindungen enthält. Die Auswahl des Lösungsmittels richtet sich ganz einfach nach den Löslichkeitseigenschaften der Chromverbindungen. Werden dagegen Phosphor- und Chromverbindungen verwendet, richtet sich die Auswahl nach den Löslichkeitseigenschaften der betreffenden organischen Phosphorverbindungen einerseits und der Chrom(III)-Verbindungen andererseits: Sollten beispielsweise die angewandten organischen Phosphorverbindungen nicht in Wasser oder Mischungen aus Wasser und polaren organischen Lösungsmitteln löslich sein, wird man sie getrennt von den wasserlöslichen Chrom(III)-Verbindungen aus organischen Lösungsmitteln auf die Hydrogele und Xerogele auftragen. Der Fachmann kann daher die geeigneten Lösungsmittel und die vorteilhafteste Verfahrensweise ganz einfach anhand der bekannten Löslichkeitseigenschaften der organischen Phosphorund Chrom(III)- Verbindungen auswählen.

Unabhängig davon, nach welcher Methode und aus welchem Lösungsmittel die vorstehend beschriebenen Chromverbindungen auf die Hydrogele und Xerogele aufgetragen werden, kommen sie stets in einer Menge zur Anwendung, daß der Chromgehalt des fertigen Chromkatalysators (A) bei 0,01 bis 10, vorzugsweise 0,05 bis 5 und insbesondere 0,1 bis 2 Gew.-% liegt. Im allgemeinen empfiehlt es sich nicht, geringere oder höhere Chromgehalte zu wählen, weil ansonsten die resultierenden Chromkatalysatoren nicht mehr die gewünschten katalytischen Eigenschaften haben.

Werden indes die organischen Phosphorverbindungen und die Chrom(III)-Verbindungen auf die Hydrogele und Xerogele aufgetragen, liegt das Atomverhältnis von Chrom:Phosphor bei 10:1 bis 1:10. Im allgemeinen empfiehlt es sich nicht, größere oder kleinere Verhältnisse zu wählen, weil ansonsten die katalytische Wirksamkeit der erfindungsgemäßen Suspension nachteilig beeinflußt wird. Bei dem Atomverhältnis Chrom:Phosphor von 10:1 bis 1:10 handelt es sich demnach um einen optimalen Bereich, innerhalb dessen die Atomverhältnisse frei gewählt und den jeweiligen Polymerisationsverfahren gezielt angepaßt werden können.

Unabhängig davon, welches Atomverhältnis von Chrom:Phosphor innerhalb des vorstehend genannten optimalen Bereichs eingestellt wird, werden die Phosphor- und Chrom(III)-Verbindungen in einer solchen Menge aufgetragen, daß im fertigen Chromkatalysator (A) ein Chromgehalt von 0,01 bis 10, vorzugsweise 0,05 bis 5 und insbesondere 0,1 bis 2 Gew.-% und ein Phosphorgehalt von 0,01 bis 10, vorzugsweise 0,05 bis 7 und insbesondere 0,1 bis 5 Gew.-% resultieren. Im allgemeinen empfiehlt es sich nicht, geringere oder höhere Chrom- und Phosphorgehalte zu wählen, weil ansonsten die resultierenden Chromkatalysatoren häufig nicht mehr die gewünschten katalytischen Eigenschaften haben.

Erfindungsgemäß wird die in der vorstehend beschriebenen Weise hergestellte Katalysatorvorstufe (A') bei höheren Temperaturen in einer oxidierenden Atmosphäre aktiviert, wodurch der erfindungsgemäß zu verwendende feinteilige, geträgerte Chromkatalysator (A) resultiert. Methodisch gesehen weist dieser Aktivierungsschritt keine Besonderheiten auf, sondern er kann in üblicher und bekannter Weise durch Erhitzen des Zwischenproduktes auf Temperaturen von 300 bis 900, vorzugsweise 500 bis 750°C erfolgen. Bekanntermaßen wird hierbei das Zwischenprodukt in einer oxidierenden Atmosphäre erhitzt. Beispiele geeigneter oxidierender Atmosphären sind reiner Sauerstoff, Sauerstoff-Edelgas-Gemische und Luft, von denen Luft aus Gründen der Wirtschaftlichkeit bevorzugt verwendet wird. Im allgemeinen liegt die Aktivierungszeit bei 30 Minuten bis 24 Stunden, wobei eine Dauer von 1 bis 10 Stunden von Vorteil ist.

Bei der Aktivierung können sowohl die noch vorhandene Katalysatorvorstufe (A') als auch der bereits gebildete Chromkatalysator (A) in üblicher und bekannter Weise fluoridiert oder silyliert werden. Ein Beispiel für ein geeignetes Fluoridierungsmittel ist Ammoniumhexafluorsilikat.

Erfindungsgemäß wird der auf die vorstehend beschriebene Weise erhältliche Chromkatalysator (A) zusammen mit der metallorganischen Verbindung (B) in dem inerten Suspensionsmittel (C) suspendiert.

Erfindungsgemäß werden als metallorganische Verbindungen (B) Verbindungen der allgemeinen Formel I und/oder II verwendet.

Beispiele geeigneter Alkylreste R in den allgemeinen Formeln I und II sind Methyl, Ethyl, n-Propyl, i-Propyl, n-Butyl, sec.-Butyl, tert.-Butyl, n-Pentyl-, n-Hexyl-, n-Heptyl-, n-Octyl-, sec.-Octyl-, tert.-Octyl, 2-Ethylhexyl, n-Nonyl und n-Decyl, von denen n-Butyl und 2-Ethylhexyl besonders vorteilhaft sind und deshalb bevorzugt angewandt werden.

Beispiele geeigneter Arylreste R sind Phenyl und Naphthyl.

Von all den vorstehend genannten Resten R ist n-Butyl ganz besonders vorteilhaft und wird deshalb ganz besonders bevorzugt angewandt.

Beispiele gut geeigneter metallorganischer Verbindungen (B) der allgemeinen Formel I sind Ethyllithium, -natrium und -kalium, n-Propyllithium, -natrium und -kalium, i-Propyllithium, -natrium und -kalium, n-Butyllithium, -natrium und -kalium, sec.-Butyllithium, -natrium und -kalium, Cyclohexyllithium, -natrium und -kalium, 2-Ethylhexyllithium, -natrium und -kalium sowie deren Gemische, von denen n-Butyllithium besonders vorteilhaft ist und daher besonders bevorzugt angewandt wird.

Beispiele gut geeigneter metallorganischer Verbindungen (B) der allgemeinen Formel II sind Diethylmagnesium, -calcium und -zink, Di-n-propylmagnesium, -calcium und -zink, Di-n-butylmagnesium, -calcium und -zink, Di-n-pentylmagnesium, -calcium und -zink, Di-n-hexylmagnesium, -calcium und -zink, Dicyclohexylmagnesium-, -calcium und -zink, n-Butyloctylmagnesium, -calcium und -zink, Di-n-octylmagnesium, -calcium und -zink, Bis-(2-ethylhexyl)magnesium, -calcium und -zink sowie deren Gemische, von denen Di-n-butylmagnesium besonders vorteilhaft ist und deshalb besonders bevorzugt angewandt wird.

Von all den vorstehend genannten metallorganischen Verbindungen (B) sind indes die definitionsgemäßen Lithium-Organyle und hier insbesondere n-Butyllithium am vorteilhaftesten. Diese Verbindung wird deshalb ganz besonders bevorzugt verwendet.

Unabhängig davon, ob man metallorganische Verbindungen (B) der allgemeinen Formel I oder der allgemeinen Formel II verwendet, werden sie bei der Herstellung der erfindungsgemäßen Suspension in einer solchen Menge angewandt, daß das Molverhältnis von Chrom im Chromkatalysator (A) zu metallorganischer Verbindung (B) bei 1:0,1 bis 1:20 liegt. Im allgemeinen empfiehlt es sich nicht, größere oder kleiner Molverhältnisse zu wählen, weil dann die resultierende Suspension in ihren anwendungstechnischen Eigenschaften häufig nicht mehr in vollem Umfange befriedigt. Demgemäß handelt es sich bei den Molverhältnissen von 1:0,1 bis 1:20 um einen optimalen Bereich, innerhalb dessen das Molverhältnis von Chrom im Chromkatalysator (A) zu metallorganischer Verbindung (B) frei gewählt und weiter optimiert werden kann. Innerhalb dieses optimalen Bereichs sind die Molverhältnisse von 1:0,5 bis 1:5, insbesondere 1:1 bis 1:3, hervorzuheben, weil erfindungsgemäße Suspensionen, welche ein solches Molverhältnis von Chrom im Chromkatalysator (A) zu metallorganischer Verbindungen (B) aufweisen, besonders hervorragende Phillips-Katalysatoren sind.

Die dritte wesentliche Komponente der erfindungsgemäßen Suspension ist das inerte Suspensionsmittel, worin die vorstehend genannten essentiellen Bestandteile (A) und (B) suspendiert werden. Im Rahmen der vorliegenden Erfindung bedeutet inert, daß das Suspensionsmittel (C) nicht mit den Bestandteilen (A) und (B) reagiert.

Beispiele geeigneter Suspensionsmittel sind Isobutan, Pentan, Hexan, Cyclohexan, Heptan, Petrolether, Benzin und Dieselöl, von denen Heptan besonders vorteilhaft ist und deshalb besonders bevorzugt angewandt wird.

Methodisch gesehen weist die Herstellung der erfindungsgemäßen Suspension aus ihren wesentlichen Bestandteilen (A), (B) und (C) keine Besonderheiten auf, sondern kann in üblicher und bekannter Weise in konventionellen Reaktionsgefäßen, welche mit Rührern ausgerüstet sind, durchgeführt werden. Im allgemeinen werden hierbei Temperaturen von -20 bis +100°C, insbesondere 15 bis 30°C, angewandt. Es versteht sich von selbst, daß hierbei - wie auch sonst bei der Handhabung metallorganischer Verbindungen (B) - unter Intertgas gearbeitet wird. Im allgemeinen wird die erfindungsgemäße Suspension nach dem Zusammengeben ihrer wesentlichen Bestandteile (A), (B) und (C) während 10 Minuten bis 2 Stunden nachgerührt.

Die hiernach resultierende erfindungsgemäße Suspension kann direkt für die Polymerisation von Ethylen und die Copolymerisation von Ethylen mit α-Olefinen angewandt werden Nach längerer Standzeit kann man die erfindungsgemäße Suspension vor ihrer Verwendung erneut homogenisieren. Man kann indes auch eine eingedickte erfindungsgemäße Suspension verwenden, welche man erhält, indem man das Suspensionsmittel (C) zum Teil verdampft oder indem man die erfindungsgemäße Suspension sich absetzen läßt, wonach man nur den abgesetzten eingedickten Anteil der Suspension bei der (Co)Polymerisation verwendet.

Es ist indes möglich, außer der erfindungsgemäßen Suspension bei der (Co)Polymerisation noch Cokatalysatoren (D) der bereits genannten allgemeinen Formeln I und II sowie der nachstehend aufgeführten Formeln III und IV zu verwenden, wenn dies gewünscht wird.

M²R¹ ₃₋ₙXₙ (III)

MM²RR¹ ₃ (IV)

In der allgemeinen Formel IV haben die Variablen M und R die vorstehend bei den allgemeinen Formeln I und II angegebene Bedeutung. Demgegenüber steht die Variable M² in den allgemeinen Formeln III und IV für Bor und Aluminium. Die Variable R¹ dagegen bezeichnet einen Rest R sowie C₁- bis C₁₀-Alkoxy und C₆- bis C₂₀-Aryloxy. Die Variable X steht für Fluor, Chlor, Brom und Iod. Der Index n bezeichnet 0 oder 1 und 2.

Demgemäß handelt es sich bei diesen Cokatalysatoren (D) um die vorstehend genannten metallorganischen Verbindungen (B) oder um übliche und bekannte bor- und aluminiumorganische Verbindungen wie Ethylaluminiumdichlorid, Triethylaluminium, Triethylboran, Lithiumtetra-n-butylborat und Lithiumtriethyl-n-butylborat.

Unabhängig davon, ob die erfindungsgemäße Suspension mit oder ohne die genannten Cokatalysatoren (D) angewandt wird, eignet sie sich für die Durchführung aller üblichen und bekannten Polymerisationsverfahren, welche für die (Co)Polymerisation von Ethylen in Betracht kommen. Insbesondere eignet sie sich für kontinuierliche oder diskontinuierliche Gasphasen- polymerisationsverfahren, bei denen die Durchmischung durch Rühren oder durch Fluidieren im Gasstrom gewährleistet wird. Vor allem aber eignet sich die erfindungsgemäße Suspension für die (Co)Polymerisation von Ethylen nach den üblichen und bekannten sogenannten particle-form-Verfahren in einer Suspension aus einem gesättigten Kohlenwasserstoff und Ethylen sowie gegebenenfalls α-Olefinen unter einem Druck von 20 bis 50, insbesondere 40 bar, und Temperaturen von 90 bis 110°C.

Für die Durchführung dieser üblichen und bekannten (Co)Polymerisationsverfahren kommen Schleifenreaktoren, Autoklaven, Gasphasenwirbelschichtreaktoren und Reaktoren mit gerührter Gasphase in Betracht.

Beispiele für geeignete α-Olefine, welche mit Ethylen copolymerisiert werden können, sind Propen, But-1-en, Pent-1-en, Hex-1-en und Oct-1-en sowie die konjugierten und nicht konjugierten Diolefine Butadien, Penta-1,3-dien, 2,3-Dimethylbutadien, Penta-1,4-dien, Hexa-1,5-dien und Vinylcyclohexen. Im allgemeinen werden diese α-Olefine dem Ethylen in einer solchen Menge zugesetzt, daß Ethylencopolymerisate aus 96 bis 99,8 Gew.-% an einpolymerisiertem Ethylen und 0,2 bis 4 Gew.-% mindestens eines einpolymerisierten Comonomeren entstehen.

Bei all diesen (Co)Polymerisationsverfahren liefert die erfindungsgemäße Suspension (Co)Polymerisate einer ausgesprochen hohen Schüttdichte. Hierdurch wird zum einen die Raum-Zeit-Ausbeute der (Co)Polymerisationsverfahren deutlich erhöht, zum anderen ist bei der weiteren Verarbeitung der (Co)Polymerisate zu Fertigteilen - z.B. mit Hilfe von Blasformmaschinen - ein hoher Produktdurchsatz möglich. Ein weiterer besonderer Vorteil, welcher sich aufgrund der Verwendung der erfindungsgemäßen Suspension für die (Co)Polymerisation ergibt, ist die besonders gute Stabilisatorhaftung am resultierenden Polymergrieß.

### Beispiele und Vergleichsversuche

### Beispiel 1

### Die Herstellung einer erfindungsgemäßen Suspension und ihre Verwendung zur Herstellung von Polyethylen

In einem 20 l-Glaskolben wurden 2 kg Aluminiumsilikat-Xerogel (verwendet wurde Aluminium-Cogel Nr. 6 der Firma Grace, Worms) unter Stickstoff in 8 l Heptan suspendiert. Zu dieser Suspension gab man 135 g Tris-acetylacetonato-chrom(III) und 240 g (entsprechend 224 ml) Triethylphosphat. Nach 30 minütigem Rühren wurde das Suspensionsmittel im Rotationsverdampfer abgedampft, und es resultierte die Katalysatorvorstufe (A') als rieselfähiges, graurotes Pulver eines Chromgehalts von 1 Gew.-% und eines Phosphorgehalts von 2 Gew.-%.

Diese Katalysatorvorstufe (A') wurde in einem üblichen und bekannten Wirbelschichtaktivator bei 600°C im Luftstrom während 2 Stunden aktiviert, wodurch der Chromkatalysator (A) resultierte.

2 kg dieses Chromkatalysators (A) wurden in einem 10 l-Glaskolben bei 25°C in 8 l Heptan (Suspensionsmittel C) suspendiert. Unter Rühren wurden 242 ml einer 15 gew.-%igen Lösung n-Butyllithium in Heptan während 60 Minuten zugetropft. Die angewandten Mengen entsprachen einem molaren Verhältnis von Chrom im Chromkatalysator (A) zu n-Butyllithium von 1:1. Es resultierte eine schwarze Suspension, welche während 60 Minuten bei 25°C nachgerührt wurde.

Diese Suspension wurde in ein Vorratsgefäß gefüllt. Nach einer Weile setzte sich schwarzer Katalysatorschlamm, d.h. eine eingedickte Suspension, aus der Suspension ab. Dieser Katalysatorschlamm wurde direkt für die Polymerisation von Ethylen verwendet. Die Polymerisation selbst wurde in einem Schleifenreaktor durchgeführt, dessen Reaktionsraum aus einem Rohrkreis von 0,2 cm³ Inhalt bestand. Der Reaktionsraum war mit einer 40 gew.-%igen Suspension von Polyethylen in Isobutan gefüllt, welche durch eine Propellerpumpe so rasch umgepumpt wurde, daß eine turbulente Strömung im Reaktionsraum herrschte. Im Reaktor wurde dabei eine Temperatur von 105°C konstant aufrechterhalten. Des weiteren wurde durch Regelung der Menge an ein- und ausgeschleustem Suspensionsmittel (je 35 kg/h Isobutan) die Konzentration des in Isobutan gelösten Ethylens (15 Vol.-%) konstant gehalten. Der Katalysatorschlamm wurde aus dem Vorratsgefäß in einer Menge von 20 ml/h in den Reaktionsraum eingeschleust. In dieser Weise wurden 27 kg/h an Polymerisatgrieß erhalten, welcher das in der Tabelle aufgeführte Eigenschaftsprofil aufwies. Von den in der Tabelle aufgeführten Eigenschaften sind vor allem die ausgesprochen hohe Schüttdichte und die besonders gute Rieselfähigkeit hervorzuheben.

### Beispiel 2

### Die Herstellung einer erfindungsgemäßen Suspension und ihre Verwendung zur Herstellung von Polyethylen

In einem 20 l-Glaskolben wurden bei Raumtemperatur 155,5 g Cr(NO₃)₃·9 H₂O in Methanol gelöst. Zu dieser unter Inertgas gehaltenen Lösung gab man 2 kg Aluminium-Cogel Nr. 6 der Firma Grace, Worms (Aluminiumsilikat-Xerogel). Die resultierende Suspension wurde während 30 Minuten bei Raumtemperatur gerührt. Im Anschluß daran wurde das Suspensionsmittel im Rotationsverdampfer abgedampft. Es resultierte die Katalysatorvorstufe (A') als grünes, rieselfähiges Pulver.

Diese Katalysatorvorstufe (A') wurde wie in Beispiel 1 beschrieben in den Chromkatalysator (A) umgewandelt.

2 kg dieses Chromkatalysators (A) wurden in einem 10 l-Glaskolben bei 25°C in 6 l Heptan (Suspensionsmittel C) suspendiert. Unter Rühren wurden 242 ml einer 15 gew.-%igen n-Butyllithium-Lösung in Heptan während 60 Minuten zugetropft. Das molare Verhältnis von Chrom im Chromkatalysator (A) zu n-Butyllithium lag hierbei bei 1:1. Die resultierende schwarze Suspension wurde noch während 60 Minuten bei 25°C nachgerührt und dann wie bei Beispiel 1 beschrieben in ein Vorratsgefäß eingefüllt, worin sich der schwarze Katalysatorschlamm, d.h. die eingedickte Suspension, absetzte. Dieser wurde wie in Beispiel 1 direkt für die Polymerisation verwendet.

Die Polymerisation selbst wurde wie bei Beispiel 1 beschrieben durchgeführt, nur daß die Polymerisationstemperatur statt bei 104°C bei 108°C lag und daß man statt 20 ml/h des Katalysatorschlamms des Beispiels 1 13 ml/h des Katalysatorschlamms des Beispiels 2 in den Reaktionsraum einschleuste. In dieser Weise wurden 29 kg/h an Polyethylengrieß erhalten, dessen wichtigste Eigenschaften gleichfalls in der Tabelle zusammengestellt sind. Auch hier sind vor allem die hohe Schüttdichte und die vorzügliche Rieselfähigkeit des Polymerisatgrießes hervorzuheben. Der Polymerisatgrieß ließ sich - ebenso wie der des Beispiels 1 - besonders wirtschaftlich zu Formteilen weiterverarbeiten.

### Vergleichsversuch A

Die Herstellung einer nicht erfindungsgemäßen Suspension und ihre Verwendung zur Herstellung von Polyethylen.

Beispiel 1 wurde wiederholt, nur daß der Suspension des Chromkatalysators (A) kein n-Butyllithium zugesetzt wurde.

Bei der Polymerisation mußten 34 ml/h Katalysatorschlamm zudosiert werden, um bei einer Reaktionstemperatur von 104°C 30 kg/h an Polyethylen in Grießform zu erhalten.

Dessen Eigenschaften werden in der Tabelle den Eigenschaften des in erfindungsgemäßer Verfahrensweise erhaltenen Polyethylens der Beispiele 1 und 2 gegenübergestellt. Der Vergleich zeigt, daß der Polyethylengrieß des Vergleichsversuchs A in seiner Schüttdichte und seiner Rieselfähigkeit nicht nur dem Polymerisatgrieß des direkt vergleichbaren Beispiels 1, sondern auch dem des nur mittelbar vergleichbaren Beispiels 2 deutlich unterlegen war.

### Beispiel 3

### Die Herstellung einer erfindungsgemäßen Suspension und ihre Verwendung zur Herstellung von Polyethylen

15 kg des in der DE-A-25 40 279 beschriebenen Xerogels und 40 1 einer 1 gew.-%igen Lösung von Cr(NO₃)₃·9 H₂O in Aceton wurden in einen Doppelkonusmischer gefüllt. Der Mischer wurde von außen mit Dampf auf 130°C beheizt, und es wurde das Aceton unter fortgesetztem Rotieren des Mischers abdestilliert.

Die hierbei resultierende Katalysatorvorstufe (A') wurde bei 700°C während 10 h in einem Luftstrom in einem Wirbelschichtaktivator aktiviert.

11,57 kg des so erhaltenen Chromkatalysators (A) wurden in einer 200 l Glaskugel bei 25°C in 105 l Heptan suspendiert. Zur Suspension wurden unter Rühren 2,9 l einer 15 gew.-%igen n-Butyllithiumlösung in Heptan innerhalb einer Stunde hinzugefügt. Die angewandten Mengen entsprachen einem molaren Verhältnis von Chrom im Chromkatalysator (A) zu n-Butyllithium von 1:2. Die resultierende schwarze Suspension wurde während einer Stunde bei Raumtemperatur nachgerührt.

Die erfindungsgemäße Suspension wurde in ein Vorratsgefäß eingefüllt und für die Polymerisation von Ethylen verwendet. Hierbei wurde in einem Schleifenreaktor gearbeitet, dessen Rohrkreis einen Reaktionsraum von 6 m³ aufwies. Der Reaktionsraum war mit einer 45 gew.-%igen Suspension von Polyethylen in Isobutan gefüllt, welche durch eine Propellerpumpe mit 3000 Upm umgepumpt wurde, so daß im Reaktionsraum eine turbulente Strömung herrschte. Im Reaktor wurde eine Temperatur von 96,1°C aufrechterhalten. Des weiteren wurde durch Regelung der Menge an ein- und ausgeschleustem Suspensionsmittel (je 720 kg/h Isobutan) die Konzentration des im Suspensionsmittel gelösten Ethylens bei 11 Vol.-% konstant gehalten.

Bei diesem kontinuierlich stationären Betrieb wurden 236 g/h an erfindungsgemäßer Suspension ein- und 780 kg/h Polyethylen in Grießform ausgeschleust.

Die Eigenschaften des so erhaltenen Polyethylens werden in der Tabelle den Eigenschaften des Polyethylens des Vergleichsversuchs B gegenübergestellt. Der Vergleich zeigt, daß die Schüttdichte des in erfindungsgemäßer Verfahrensweise hergestellten Polymerisatgrießes diejenige des in nicht erfindungsgemäßer Weise hergestellten Polymerisatgrießes übertrifft.

### Vergleichsversuch B

### Die Herstellung einer nicht erfindungsgemäßen Suspension und ihre Verwendung zur Herstellung von Polyethylen

Beispiel 3 wurde wiederholt, nur daß der Suspension des Chromkatalysators (A) kein n-Butyllithium zugesetzt wurde.

Bei der Polymerisation wurde eine Reaktionstemperatur von 94,6°C eingehalten. Es mußten 206 g/h an Katalysatorsuspension zudosiert werden, um 660 kg/h an Polyethylen in Grießform zu erzeugen.

Dessen Eigenschaften finden sich ebenfalls in der Tabelle.

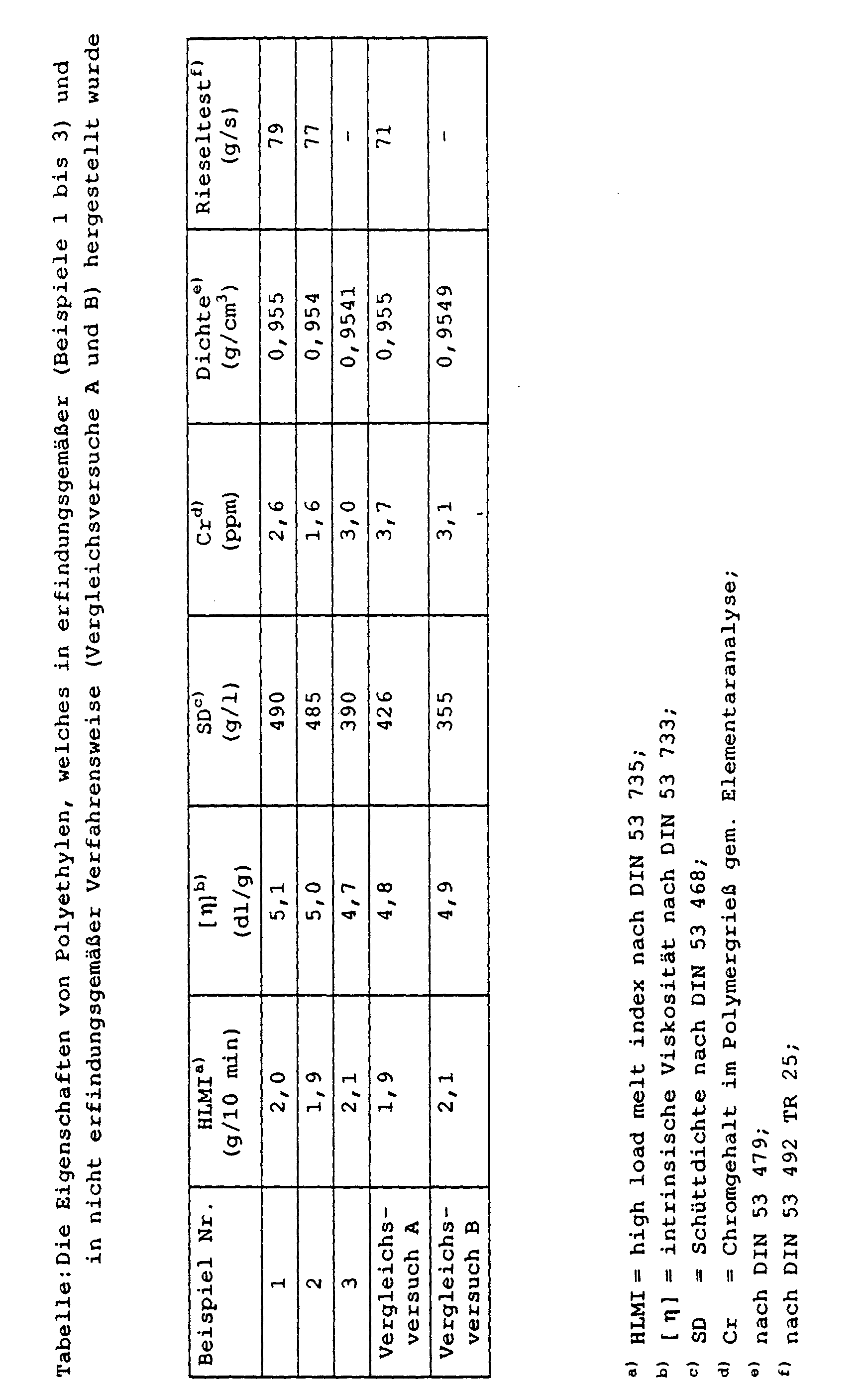

## Patentansprüche

1. Verfahren zur Herstellung von Ethylenhomopolymerisaten oder -copolymerisaten mit α-Olefinen durch Polymerisation von Ethylen oder von Gemischen aus Ethylen und α-Olefinen mit Hilfe von Phillips-Katalysatoren, **dadurch gekennzeichnet, daß** man hierbei eine Phillips-Katalysatorsuspension in ein Vorratsgefäß einfüllt, und sie als solche für die Polymerisation verwendet,
welche Phillips-Katalysator suspension
A) mindestens einen feinteiligen, geträgerten Chromkatalysator,
B) mindestens eine metallorganische Verbindung der allgemeinen Formeln I und/oder II,
MR (I)
M¹R₂ (II)
worin der Index und die Variablen die folgende Bedeutung haben:
M Lithium, Natrium und Kalium,
M¹ Magnesium, Calcium und Zink,
R C₁- bis C₁₀-Alkyl und C6- bis C₂₀-Aryl;
und
C) mindestens ein inertes Suspensionsmittel
enthält, herstellbar, indem man
(1) mindestens eine Chromverbindung auf ein feinteiliges, anorganisches Hydrogel oder Xerogel unter Bildung einer feinteiligen Katalysatorvorstufe (A') aufträgt,
(2) die Katalysatorvorstufe (A') bei höheren Temperaturen in einer oxidierenden Atmosphäre aktiviert, wodurch der Chromkatalysator (A) mit einem Chromgehalt im Bereich von 0,01 bis 10 Gew.-% entsteht, und
(3) den Chromkatalysator (A) zusammen mit der metallorganischen Verbindung (B) in dem inerten Suspensionsmittel (C) suspendiert.

2. Verfahren nach Anspruch 1, **dadurch gekennzeichnet, daß** es sich bei den Chromverbindungen um Chrom(III)-Verbindungen handelt.

3. Verfahren nach Anspruch 2, **dadurch gekennzeichnet, daß** es sich bei den Chrom(III)- Verbindungen um wasserlösliche Salze des dreiwertigen Chroms oder um Chrom(III)-Chelatkomplexe handelt.

4. Verfahren nach Anspruch 3, **dadurch gekennzeichnet, daß** man als Chrom(III)-Salze Chrom(III)-nitrat oder -acetat und als Chrom(III)-Chelatkomplex Tris-acetylacetonatochrom(III) verwendet.

5. Verfahren nach einem der Ansprüche 2 bis 4, **dadurch gekennzeichnet, daß** man im Verfahrensschritt (1) außer der Chrom(III)-Verbindung noch mindestens eine organische Phosphor(III)-, -(VI)- und/oder -(V)-Verbindung, welche unter den angewandten Reaktionsbedingungen nicht mit der Chrom(III)-Verbindung reagiert, in beliebiger Reihenfolge vor, gleichzeitig mit oder nach der Chrom(III)-Verbindung aufträgt.

6. Verfahren nach einem der Ansprüche 1 bis 5, **dadurch gekennzeichnet, daß** man als metallorganische Verbindungen (B) C₁-C₁₀-Alkyllithium-Verbindungen verwendet.

7. Verfahren nach Anspruch 6, **dadurch gekennzeichnet, daß** man n-Butyllithium verwendet.

8. Verfahren nach einem der Ansprüche 1 bis 7, **dadurch gekennzeichnet, daß** man in der Gegenwart von Wasserstoff (co)polymerisiert.

9. Verfahren nach einem der Ansprüche 1 bis 8, **dadurch gekennzeichnet, daß** man in der Gegenwart von Cokatalysatoren (D) der allgemeinen Formeln I bis IV,
MR (I)
M¹R₂ (II)
M²R¹ ₃₋ₙXₙ (III)
MM²RR¹ ₃ (IV)
worin der Index und die Variablen die folgende Bedeutung haben:
M Lithium, Natrium und Kalium,
M¹ Magnesium und Zink,
M² Bor und Aluminium,
R C₁- bis C₁₀-Alkyl und C₆- bis C₂₀-Aryl,
R¹ R und C₁- bis C₁₀-Alkoxy und C₆- bis C₂₀-Aryloxy,
X Fluor, Chlor, Brom und Jod,
n 0, 1 und 2;
(co)polymerisiert.

10. Verfahren nach einem der Ansprüche 1 bis 9, **dadurch gekennzeichnet, daß** man die Phillips-Katalysatorsuspension vor ihrer Verwendung absitzen läßt, wonach man die sich hierbei abscheidende verdickte Phillips-Katalysatorsuspension für die (Co)Polymerisation verwendet.

11. Verfahren nach einem der Ansprüche 1 bis 9, **dadurch gekennzeichnet, daß** man die Phillips-Katalysatorsuspension vor ihrer Verwendung homogenisiert.

## Claims

1. A process for the preparation of an ethylene homopolymer or ethylene copolymer with α-olefins by polymerizing ethylene or a mixture of ethylene and α-olefins with the aid of a Phillips catalyst, wherein a Phillips catalyst suspension is poured into a storage vessel and used as such for the polymerization, which a Phillips catalyst suspension contains
A) at least one finely divided supported chromium catalyst,
B) at least one organometallic compound of the general formulae I and/or II
MR (I)
M¹R₂ (II)
where n is lithium, sodium or potassium, M¹ is magnesium, calcium or zinc and R is C₁-C₁₀-alkyl or C₆-C₂₀-aryl,
and
C) at least one inert suspending agent,
and which can be prepared by
(1) applying at least one chromium compound to a finely divided, inorganic hydrogel or xerogel with formation of a finely divided catalyst intermediate (A'),
(2) activating the catalyst intermediate (A') at elevated temperatures in an oxidizing atmosphere, with the result that the chromium catalyst (A) with a chromium content of from 0.01 to 10% by weight is formed, and
(3) suspending the chromium catalyst (A) together with the organometallic compound (B) in the inert suspending agent (C).

2. A process as claimed in claim 1, wherein the chromium compounds are chromium(III) compounds.

3. A process as claimed in claim 2, wherein the chromium(III) compounds are water-soluble salts of trivalent chromium or chromium(III) chelate complexes.

4. A process as claimed in claim 3, wherein chromium(III) nitrate or acetate is used as the chromium (III) salt and trisacetylacetonatochromium(III) is used as the chromium(III) chelate complex.

5. A process as claimed in any of claims 2 to 4, wherein, in process step (1), in addition to the chromium(III) compound, at least one organic phosphorus(III), (VI) or (V) compound which does not react with the chromium(III) compound under the reaction conditions used is also applied in any order, before, simultaneously with or after the chromium(III) compound.

6. A process as claimed in any of claims 1 to 5, wherein C₁-C₁₀-alkyllithium compounds are used as the organometallic compounds (B).

7. A process as claimed in claim 6, wherein n-butyllithium is used.

8. A process as claimed in any of claims 1 to 7, wherein (co)polymerization is effected in the presence of hydrogen.

9. A process as claimed in any of claims 1 to 8, wherein (co)polymerization is effected in the presence of a cocatalyst (D) of the formula I, II, III or IV
MR (I)
M¹R₂ (II)
M²R¹₃₋ₙXₙ (III)
MM²RR¹₃ (IV)
where M is lithium, sodium or potassium, M¹ is magnesium or zinc, M² is boron or aluminum, R is C₁-C₁₀-alkyl or C₆-C₂₀-aryl, R¹ is R, C₁-C₁₀-alkoxy or C₆-C₂₀-aryloxy, X is fluorine, chlorine, bromine or iodine and n is 0, 1 or 2.

10. A process as claimed in any of claims 1 to 9, wherein the Phillips catalyst suspension is allowed to settle out before being used, after which the thickened Phillips catalyst suspension which separates out is used for the the (co)polymerization.

11. A process as claimed in any of claims 1 to 9, wherein the Phillips catalyst suspension is homogenized before being used.

## Revendications

1. Procédé pour la préparation d'homopolymères ou de copolymères d'éthylène avec des α-oléfines par polymérisation d'éthylène ou de mélanges d'éthylène et d'α-oléfines au moyen de catalyseurs de Phillips, **caractérisé par le fait qu'**on charge dans un récipient de réserve une suspension de catalyseur de Phillips et on utilise celle-ci telle quelle pour la polymérisation, laquelle suspension de catalyseur de Phillips contient
A) au moins un catalyseur au chrome sur support, finement divisé,
B) au moins un composé organique organométallique de formules générales I et/ou II,
MR (I)
M¹R₂ (II)
où l'indice et les variables ont la signification suivante:
M lithium; sodium et potassium,
M¹ magnésium, calcium et zinc,
R alkyle en C₁ à C₁₀ et aryle en C₆ à C₂₀;
et
C) au moins un agent de mise en suspension inerte,
pouvant être préparé par
(1) dépôt d'au moins un composé de chrome sur un hydrogel ou un xérogel inorganique, finement divisé, avec formation d'un progéniteur de catalyseur finement divisé (A'),
(2) activation du progéniteur de catalyseur (A') à des températures élevées dans une atmosphère oxydante, ce qui forme le catalyseur au chrome (A) ayant une teneur en chrome dans l'intervalle de 0,1 à 10% en poids, et
(3) mise en suspension du catalyseur au chrome (A) conjointement avec le composé organométallique (B) dans un milieu de mise en suspension inerte (C).

2. Procédé selon la revendication 1, **caractérisé par le fait qu'**il s'agit pour les composés de chrome de composés de chrome(III).

3. Procédé selon la revendication 2, **caractérisé par le fait qu'**il s'agit pour les composés de chrome(III) de sels hydrosolubles de chrome trivalent ou de complexes de chélate de chrome(III).

4. Procédé selon la revendication 3, **caractérisé par le fait qu'**on utilise comme sels de chrome(III) du nitrate ou de l'acétate de chrome(III) et comme complexe de chélate de chrome(III) du tris-acétylacétonatochrome(III).

5. Procédé selon l'une des revendications 2 à 4, **caractérisé par le fait qu'**on dépose dans l'étape de procédé (1), outre le composé chrome(III), encore au moins un composé de phosphore(III), (VI) et/ou (V) organique, qui ne réagit pas avec le composé de chrome(III) dans les conditions de réaction employées, et cela dans un ordre quelconque avant, conjointement avec, ou après le composé de chrome(III).

6. Procédé selon l'une des revendications 1 à 5, **caractérisé par le fait qu'**on utilise comme composés organométalliques (B) des composés d'alkyl(C₁-C₁₀)lithium.

7. Procédé selon la revendication 6, **caractérisé par le fait qu'**on utilise du n-butyllithium.

8. Procédé selon l'une des revendications 1 à 7, **caractérisé par le fait qu'**on (co)polymérise en présence d'hydrogène.

9. Procédé selon l'une des revendications 1 à 8, **caractérisé par le fait qu'**on (co)polymérise en présence de cocatalyseurs (D) de formules générales I à IV,
MR (I)
M¹R₂ (II)
M²R¹₃₋ₙXₙ (III)
MM²RR¹₃ (IV)
où l'indice et les variables ont la signification suivante:
M lithium, sodium et potassium,
M¹ magnésium et zinc,
M² bore et aluminium,
R alkyle en C₁ à C₁₀ et aryle en C₆ à C₂₀,
R¹ R et alcoxy en C₁ à C₁₀ et aryloxy en C₆ à C₂₀,
X fluoro, chloro, bromo, iodo,
n 0, 1 et 2.

10. Procédé selon l'une des revendications 1 à 9, **caractérisé par le fait qu'**on laisse déposer la suspension de catalyseur de Phillips avant son utilisation, après quoi on utilise la suspension de catalyseur de Phillips épaissie qui s'est alors déposée, pour la (co)polymérisation.

11. Procédé selon l'une des revendications 1 à 9, **caractérisé par le fait qu'**on homogénéise la suspension de catalyseur de Phillips avant son utilisation.
